(19) Europäisches Patentamt
European Patent Office
Office européen des brevets

(11) Publication number: 0 163 532 B1

# (12) EUROPEAN PATENT SPECIFICATION

(45) Date of publication of patent specification: 16.08.90

(51) Int. Cl.$^5$: C 01 B 3/16, B 01 J 2/24, B 01 J 31/20

(21) Application number: 85303796.8

(22) Date of filing: 30.05.85

## (54) Catalyst and procedure for producing gas from carbon monoxide and water.

(30) Priority: 30.05.84 FI 842175

(43) Date of publication of application: 04.12.85 Bulletin 85/49

(45) Publication of the grant of the patent: 16.08.90 Bulletin 90/33

(84) Designated Contracting States: BE DE FR GB IT NL SE

(56) References cited:
US-A-4 292 242
US-A-4 415 473

(73) Proprietor: NESTE OY
Keilaniemi
SF-02150 Espoo 15 (FI)

(72) Inventor: Venalainen, Tapani
Hilliruukinkatu 3 C 37
SF-80260 Joensuu (FI)
Inventor: Pakkanen, Tapani
Koulukatu 34 A 12
SF-80120 Joensuu (FI)
Inventor: Pakkanen, Tuula
Koulukatu 34 A 12
SF-80120 Joensuu (FI)
Inventor: Iiskola, Eero
Raatimiehenkatu 6 B 11
SF-06100 Porvoo (FI)

(74) Representative: Ruffles, Graham Keith et al
MARKS & CLERK 57-60 Lincoln's Inn Fields
London WC2A 3LS (GB)

EP 0 163 532 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Catalyst and procedure for producing hydrogen gas from carbon monoxide and water.

The present invention concerns a catalyst and process for producing hydrogen gas from carbon monoxide and water.

The water gas shift reaction $CO+H_2O \rightleftharpoons CO_2+H_2$ is used in producing hydrogen and also for increasing the hydrogen content of synthesis gas. The most important fields of industrial application are hydrogen production, Fischer-Tropsch synthesis and ammonia synthesis. The reaction is exothermic, and therefore highest conversion in equilibrium is achieved at low temperature. The pressure has no effect on the equilibrium.

Metal oxide mixtures are used for heterogeneous catalysis of the reaction (Satterfield: Heterogeneous Catalysis in Practice, McGraw Hill 1980). In a process operating at high temperature (325 to 550°C), a mixture of iron oxide $Fe_3O_4$ and chromium oxide $Cr_2O_3$ is used. High temperature is indispensable for achieving sufficient reaction speed. The pressure in the process is about 3 MPa. The high operating temperature of the catalyst is a disadvantage, because there is carbon monoxide in the reaction equilibrium and has to be removed for certain end-uses, for instance ammonia synthesis.

For the water gas shift reaction, heterogeneous catalysts operating at lower temperature have also been developed, which are used in association with high temperature catalysis. These catalysts contain copper oxide CuO, zinc oxide ZnO and aluminium oxide $Al_2O_3$. The operating temperature is about 200°C and pressure, 1.3 MPa.

Both catalyst types are pyrophoric and must therefore be handled in oxygen-free conditions.

Catalysis of the water gas shift reaction may also be achieved with homogeneous catalysts in a solution at low pressure and temperature. Examples of such catalysts include, for instance, rhodium and iridium carbonyl iodides (USA Patents 4,151,107 and 4,107,076) and other group VIII metal compounds (USA Patents 3,490,872 and 3,539,289).

The industrial application of the homogeneous catalysts of the prior art has been prevented by their low activity.

The object of the present invention is to achieve an improvement regarding the drawbacks presented in the foregoing. A more detailed aim of the invention in its preferred aspects is to provide a catalyst for producing hydrogen gas from carbon monoxide and water which is superior to equivalent catalysts of the prior art, and operates as a heterogeneous catalyst at a lower pressure than catalysts of the prior art.

The present invention provides a catalyst for producing hydrogen gas from carbon monoxide and water, characterised in that the catalyst comprises a group VIII metal carbonyl compound of formula

$$M_{3-n}M'_n(CO)_{12-x}L_x \cdot (\text{chel})_y$$

wherein

M represents Ru;
M' represents Fe;
n is selected from 0 to 2;
x is selected from 0 to 2;
L represents a triaryl or trialkyl phosphine or phosphite;
chel represents a chelating bidentate aromatic heterocyclic nitrogen-containing base;
y is an integer or fractional number in the range of 1 to 6.

The metal carbonyl of group VIII is thus $Ru_3(CO)_{12}$, $FeRu_2(CO)_{12}$, $Fe_2Ru(CO)_{12}$ or their derivative $M_3(CO)_{12-x}L_x$, where M is Ru and/or Fe, x=1 or 2, and L is a trialkyl- or triaryl-phosphine or phosphite.

The chelating base chel is one which complexes with the metal carbonyl and preferably has two ring nitrogen atoms. The nitrogens can be in a single ring system, suitably a fused ring system, as in a phenanthroline, or in separate, linked rings, as in a bipyridine. The heterocyclic base is preferably chosen from bipyridine or phenanthroline derivatives, more particularly 2,2'-bipyridine or 1,10-phenanthroline.

Specific examples of catalysts of this invention include:

$Ru_3(CO)_{12} \cdot$ (2,2'-bipyridine)$_3$
$Ru_3(CO)_{12} \cdot$ (1,10-phenanthroline)$_3$
$Ru_3(CO)_{11}PPh_3 \cdot$ (2,2'-bipyridine)$_3$
$Fe_2Ru(CO)_{12} \cdot$ (2,2'-bipyridine)$_3$
$FeRu_2(CO)_{12} \cdot$ (2,2'-bipyridine)$_3$

The catalysts of this invention can take an activated form. Activation is suitably achieved by heating at from 80 to 200°C for 24 to 48 h and at 0.01 to 10 MPa carbon monoxide pressure in the presence of water.

The catalysts of this invention are intended for use in heterogenous systems, and are preferably used in the form of a suspension in aqueous solution or bonded to a carrier.

The carrier can for instance be any inert inorganic or organic carrier material, including silica gel, alumina, zeolite or polymer.

The catalysis can be effected for example at 50 to 400°C and a pressure of 0.01 to 10 MPa. A catalyst

containing ruthenium carbonyl or a derivative thereof and bipyridine or a corresponding heterocyclic nitrogen compound typically accelerates the water gas shift reaction more efficiently at low temperature and pressure than the comparable catalysts of the prior art. The reaction speed can already be high at the relatively low temperature range of 80 to 150°C and pressure of 0.04 to 0.2 MPa. Thus, the energy economy of the reaction can be substantially improved and the equipment simplified.

The invention is based on observations concerning the reactions of ruthenium carbonyl $Ru_3(CO)_{12}$ and 2,2'-bipyridine in carbon monoxide. These starting materials constitute at about 80 to 100°C and 0.05 MPa a blue, air-sensitive compound, which is scantily soluble in organic solvents. This product, which is a carbonyl compound containing ruthenium and 2,2'-bipyridine, catalyzes the water gas shift reaction both in the gas phase and as a suspension in the solution phase. In addition to $Ru_3(CO)_{12}$ and 2,2'-bipyridine, $FeRu_2(CO)_{12}$ and $Fe_2Ru(CO)_{12}$ and their phosphine and phosphite derivatives have also been found to serve as catalyst starting materials. In the role of base, substituted 2,2'-bipyridines and corresponding phenanthroline compounds are also active.

Choudbury & Cole-Hamilton in J. Chem. Soc. Dalton Trans. 1885, 1982 have described the photochemical homogeneous catalysis of the water gas shift reaction using bis(2,2'-bipyridyl)(carbonyl)chlororuthenium(II) chloride. The catalysts of the present invention are for heterogenous systems, and are not the same as those in this literature reference. Furthermore, the present catalysts usually have an activity one order of magnitude higher than any catalyst of the prior art operating in equivalent conditions.

In the following examples are described the manufacture of the catalyst and its catalytic properties in the water gas shift reaction.

Example 1

Ruthenium carbonyl $Ru_3(CO)_{12}$ (0.15 mmol) and 2,2'-bipyridine (1.0 mmol) were dissolved in hydrogen-free cyclohexane (0.1 $dm^3$). When the solution was refluxed at 80°C, a black complex started to precipitate in about half an hour. In three hours, all $Ru_3(CO)_{12}$ had reacted. The resultant precipitation was filtered and washed with oxygen-free hexane and vacuum-dried. Activation was possible at 100°C for 24 to 48 hours and 0.05 MPa carbon monoxide pressure and in the presence of water.

Example II

The same procedure as in Example I was followed, but the metal carbonyl and the base were varied according to Table 1:

TABLE 1

| Metal carbonyl | Base |
|---|---|
| $Ru_3(CO)_{12}$ | 1,10-phenanthroline |
| $FeRu_2(CO)_{12}$ | 2,2'-bipyridine |
| $Fe_2Ru(CO)_{12}$ | 2,2'-bipyridine |
| $Ru_3(CO)_{11}PPh_3$ | 2,2'-bipyridine |

In these reactions there are also formed compounds of the present invention.

Example III

The catalyst may also be produced directly on the surface of the carrier, as follows: ruthenium carbonyl $Ru_3(CO)_{12}$ (0.15 mmol), and 2,2'-bipyridine (1.0 mmol) were dissolved in dichloromethane (0.05 $dm^3$). The solution was absorbed in silica gel (3.0 g), whereafter the solvent was evaporated off by evacuation. The impregnated gel was heated to 100°C under protective gas (CO, $N_2$) or in vacuum, whereby the colour of the gel turned dark blue. The gel becomes activated to an effective catalyst at 100°C for 24 to 48 hours and 0.05 MPa carbon monoxide pressure.

Example IV

The compound according to Example I catalyzes the water gas shift reaction as follows. In a reaction flask (0.01 mmol), calculated on the basis of the $Ru_3(CO)_{12}$ quantity either as a water suspension or bonded to a carrier, water (50.0 mmol) and carbon monoxide (0.736 mmol), and methane serving as internal standard, were enclosed. The reaction flask was placed in an oil bath at 150°C. After 15 minutes reaction, the temperature was lowered to 25°C and a gas analysis was carried out. The reaction flask contained 0.30 mmol CO, 0.046 mmol $CO_2$ and 0.46 mmol $H_2$. On the basis of the result, the activity of the catalyst can be calculated in units of mol $H_2$/mol catalyst×24 h, giving for the activity the figure 4400.

Example V

The experiment was repeated with a 40 minute reaction time, whereby 0.804 mmol CO and 50 mmol $H_2O$ reacted and yielded 0.77 mmol $H_2$ and $CO_2$. The carbon monoxide residue was 0.014 mmol. The activity of the catalyst was 2770. The lower activity, compared with that stated above, is caused by depletion of the starting material. Longer reaction time results in thermodynamic equilibrium of the reaction, at which there is less than 0.1 mol.% CO. The reaction may be continued several times by recharging the reaction flask with CO. The activity of the catalyst is not significantly lowered in successive experiments.

Example VI

With the experiment procedure of Example IV using a temperature of 100°C the following activities are obtained for the catalysts of Example II:

TABLE 2

| Metal carbonyl | Base | Activity ($H_2$) |
|---|---|---|
| $Ru_3(CO)_{12}$ | 2,2′-bipyridine | 694 |
| $Fe_2Ru(CO)_{12}$ | 2,2′-bipyridine | 20 |
| $FeRu_2(CO)_{12}$ | 2,2′-bipyridine | 34 |
| $Ru_3(CO)_{12}$ | 1,10-phenanthroline | 80 |
| $Ru_3(CO)_{11}PPh_3$ | 2,2′-bipyridine | 65 |

Comparison Example I

Catalyst experiments were carried out for some other $Ru_3(CO)_{12}$-heterocyclic base systems in conditions corresponding to the experimental procedures of Example IV and VI to give the results of Table 3. The systems are homogeneous and their activities are some orders of magnitude lower than the $Ru_3(CO)_{12}$-bipy-system. Some bases, such as pyrrolidine, form moderate hydrogen production systems, but react with carbon dioxide, so no true catalysis occurs in these systems.

TABLE 3
The catalytic activity of $Ru_3(CO)_{12}$ in the water gas shift reactions in different base solutions

| Base/solvent | mol $H_2$ / mol cat. 24 h | mol $CO_2$ / mol cat. 24 h |
|---|---|---|
| pyridine | 15 | 15 |
| pyridine/ethoxyethanol | 7 | 8 |
| pyridine/DMSO | 5 | 5 |
| pyridine/diglyme | 5 | 6 |
| piperidine | 10 | 0 |
| piperidine/ethoxyethanol | 8 | 0 |
| piperidine/DMSO | 2 | 0 |
| piperidine/diglyme | 10 | 0 |
| trimethylamine/diglyme | 0 | 0 |
| triethylamine/diglyme | 4 | 1 |
| triethylamine/ethoxyethanol | 0 | 1 |
| pyrrolidine | 117 | 0 |
| pyrrolidine/diglyme | 2 | 0 |
| aniline/diglyme | 0 | 7 |
| pyrrole/diglyme | 0 | 3 |
| 2-dimethylaminoethanol | 7 | 4 |
| 2-diethylaminoethanol | 0 | 1 |
| N,N-diethylaniline | 4 | 0 |
| diethanolamine | 30 | 0 |
| diethanolamine, $CO_2$ saturated | 16 | 0 |
| neocuproin/diglyme | 18 | 20 |
| ethylenediamine | 48 | 0 |
| quinoline/diglyme | 0 | 0 |
| benzylamine/diglyme | 0 | 13 |

**Claims**

1. A catalyst for producing hydrogen gas from carbon monoxide and water, characterised in that the catalyst comprises a group VIII metal carbonyl of formula

$$M_{3-n}M'_n(CO)_{12-x}L_x \cdot (chel)_y$$

wherein
M represents Ru;
M' represents Fe;

n is selected from 0 to 2;
x is selected from 0 to 2;
L represents a triaryl or trialkyl phosphine or phosphite;
chel represents a chelating bidentate aromatic heterocyclic nitrogen-containing base;
y is an integer or fractional number in the range of 1 to 6.

2. A catalyst according to claim 1, which is activated at from 80 to 200°C for 24 to 48 h and at 0.01 to 10 MPa carbon monoxide pressure in the presence of water.

3. A catalyst according to claim 1 or 2, wherein the chelating base chel is selected from bipyridine and phenanthroline compounds.

4. A catalyst according to claim 3, wherein the chelating base gel is selected from 2,2'-bipyridine and 1,10-phenanthroline.

5. A catalyst according to claim 4 which is one of:

$Ru_3(CO)_{12} \cdot (2,2'\text{-bipyridine})_3$
$Ru_3(CO)_{12} \cdot (1,10\text{-phenanthroline})_3$
$Ru_3(CO)_{11}PPh_3 \cdot (2,2'\text{-bipyridine})_3$
$Fe_2Ru(CO)_{12} \cdot (2,2'\text{-bipyridine})_3$
$FeRu_2(CO)_{12} \cdot (2,2'\text{-bipyridine})_3$

6. A process for producing hydrogen gas from carbon monoxide and water in the presence of a catalyst at a temperature of 50 to 400°C and a pressure of 0.01 to 10 MPa, characterized in that the catalyst is as defined in any preceding claim.

7. A process according to claim 6, wherein the catalyst is employed in the form of a suspension in aqueous solution or bonded to a carrier.

8. A process according to claim 7, wherein the carrier is silica gel.

9. A process according to claim 6, 7 or 8 when carried out at 80 to 150°C and a pressure of 0.04 to 0.2 MPa.

**Patentansprüche**

1. Katalysator zur Herstellung von Wasserstoffgas aus Kohlenmonoxid und Wasser, dadurch gekennzeichnet, daß der Katalysator aus einem Carbonyl eines Metalls der Gruppe VIII besteht, das die Formel:

$$M_{3-n}M'_n(CO)_{12-x}L_x \cdot (chel)_y$$

hat, worin
M Ru bedeutet;
M' Fe bedeutet;
n aus 0 bis 2 ausgewählt ist;
x aus 0 bis 2 ausgewählt ist;
L ein Triaryl- oder Trialkylphosphin oder -phosphit bedeutet;
chel eine chelatbildende, zweizähnige, aromatische, heterocyclische stickstoffhaltige Base bedeutet und
y eine ganze oder gebrochene Zahl im Bereich von 1 bis 6 ist.

2. Katalysator nach Anspruch 1, der 24 bis 48 h lang bei 80 bis 200°C und 0,01 bis 10 MPa in Gegenwart von Wasser aktiviert wird.

3. Katalysator nach Anspruch 1 oder 2, bei dem die chelatbildende Base "chel" aus Bipyridin- und Phenanthrolinverbindungen ausgewählt ist.

4. Katalysator nach Anspruch 3, bei dem die chelatbildende Base "chel" aus 2,2'-Bipyridin und 1,10-Phenanthrolin ausgewählt ist.

5. Katalysator nach Anspruch 4, der eines der folgenden Carbonyle ist:

$Ru_3(CO)_{12} \cdot (2,2'\text{-Bipyridin})_3$
$Ru_3(CO)_{12} \cdot (1,10\text{-Phenanthrolin})_3$
$Ru_3(CO)_{11}PPh_3 \cdot (2,2'\text{-Bipyridin})_3$
$Fe_2Ru(CO)_{12} \cdot (2,2'\text{-Bipyridin})_3$
$FeRu_2(CO)_{12} \cdot (2,2'\text{-Bipyridin})_3$

6. Verfahren zur Herstellung von Wasserstoffgas aus Kohlenmonoxid und Wasser in Gegenwart eines Katalysators bei einer Temperatur von 50 bis 400°C und einem Druck von 0,01 bis 10 MPa, dadurch gekennzeichnet, daß der Katalysator einer ist, wie er in einem der vorhergehenden Ansprüche definiert ist.

7. Verfahren nach Anspruch 6, bei dem der Katalysator in Form einer Suspension in wäßriger Lösung oder an einen Träger gebunden eingesetzt wird.

8. Verfahren nach Anspruch 7, bei dem der Träger Kieselsäuregel ist.

9. Verfahren nach Anspruch 6, 7 oder 8, wenn es bie 80 bis 150°C und einem Druck von 0,04 bis 0,2 MPa durchgeführt wird.

**Revendications**

1. Un catalyseur pour produire de l'hydrogène gazeux à partir de monoxyde de carbone et d'eau, ce catalyseur étant caractérisé en ce qu'il comprend un composé carbonyle de métal du groupe VIII de formule

$$M_{3-n}M'_n(CO)_{12-x}L_x \cdot (chel)_y$$

dans laquelle

M représente Ru;

M' représente Fe;

n a une valeur de 0 à 2;

x a une valeur de 0 à 2;

L représente une triaryl- ou trialcoylphosphine ou un phosphite de triaryle ou de trialcoyle;

chel représente une base azotée hétérocyclique aromatique bidentée, chélatante; et

y est un nombre entier ou fractionnaire dans la gamme de 1 à 6.

2. Un catalyseur selon la revendication 1, qui est activé entre 80 et 200°C pendant 24 à 48 heures et à une pression de monoxyde de carbone de 0,01 à 10 MPa en présence d'eau.

3. Un catalyseur selon la revendication 1 ou 2, dans lequel la base chélatante chel est choisie parmi les composés de type bipyridine et phénanthroline.

4. Un catalyseur selon la revendication 3, dans lequel la base chélatante chel est choisie parmi la 2,2'-bipyridine et la 1,10-phénanthroline.

5. Un catalyseur selon la revendication 4 choisi parmi:

$Ru_3(CO)_{12} \cdot (2,2'\text{-bipyridine})_3$

$Ru_3(CO)_{12} \cdot (1,10\text{-phénanthroline})_3$

$Ru_3(CO)_{11}PPh_3 \cdot (2,2'\text{-bipyridine})_3$

$Fe_2Ru(CO)_{12} \cdot (2,2'\text{-bipyridine})_3$

$FeRu_2(CO)_{12} \cdot (2,2'\text{-bipyridine})_3$

6. Un procédé pour produire de l'hydrogène gazeux à partir de monoxyde de carbone et d'eau en présence d'un catalyseur, à une température de 50 à 400°C et à une pression de 0,01 à 10 MPa, caractérisé en ce que le catalyseur est comme défini dans l'une quelconque des revendications précédentes.

7. Un procédé selon la revendication 6, dans lequel le catalyseur est utilisé sous forme d'une suspension en solution aqueuse ou lié à un support.

8. Un procédé selon la revendication 7, dans lequel le support est un gel de silice.

9. Un procédé selon les revendications 6, 7 ou 8, réalisé entre 80 et 150°C et à une pression de 0,04 à 0,2 MPa.